# EUROPEAN PATENT APPLICATION

(11) **EP 2 565 554 A1**
(43) Date of publication of application: **06.03.2013**
(21) Application number: 11007143.8
(22) Date of filing: 02.09.2011
(51) Int. Cl.: F24J 2/46, F24J 2/40, F24J 2/26

(54) **Thermal collector and PVT collector**

(71) Applicant: Fraunhofer-Gesellschaft, 80686 München (DE)
(72) Inventor: Dupeyrat, Patrick, 79106 Freiburg (DE); Hermann, Michael, 79100 Freiburg (DE)
(74) Representative: Riepe, Hans-Gerd

(57) **Abstract**

The present invention relates to a thermal collector which comprises a glass cover (1) and an absorber plate (3), wherein the glass cover (1) is separated from the absorber plate (3) by an air layer and the distance between the glass cover (1) and the absorber plate (3) is adjustable.

## Description

The present invention relates to a thermal collector which comprises a glass cover and an absorber plate, wherein the glass cover is separated from the absorber plate by an air layer and the distance between the glass cover and the absorber plate is adjustable.

All solar thermal collectors known in the prior art share the problem that they reach very high temperatures (stagnation conditions) in cases where no heat removal from the collector is possible. Such situations can occur, e.g. when the pump for transporting the water into the collector is not operating or when the water tank of the system is already filled up with warm water. In such conditions, solar collectors can reach temperatures exceeding 180 °C for flat plate collectors with selective absorber coatings and 120 °C for PVT collectors under PV operation. Such temperatures could result in a damage of the collector components as well as a degradation or evaporation of the heat exchanger medium. For PVT collectors, high temperatures lead to a decrease of the power generation of the PV cell since a negative temperature coefficient in most cases lowers the efficiency of the PV cells by increasing the cell temperature. In this context, it is important to note that for PVT collectors, no standard for PV certification exist for temperatures of higher than 85 °C.

In the prior art, a number of different designs for avoiding the excessive temperatures in solar collectors exists, but only a few for PVT collectors.

The WO 2004/070289 describes thermally activated vents on the side of the collector to allow the circulation of the air between the glass and the absorber plate (natural convection).

In US 4,046,134, a thermally activated system for raising and lowering the glass plate above the collector is described in order to increase the convection in the air layer.

However, all these systems show the problem that the moisture and debris can enter the collector through the vents and accumulate on the inner surface of the glass pane which leads to a lower transmission of the glass cover.

It is an object of the present invention to provide a thermal collector being constructed to avoid excessive stagnation temperatures in the collector.

This object is solved by the thermal collector with the features of claim 1. The further dependent claims define preferred embodiments.

According to the present invention, a thermal collector is provided, which comprises a glass cover and an absorber plate, wherein the glass cover is separated from the absorber plate by an air layer. The absorber plate is mobile so that the distance between the glass cover and the absorber plate is adjustable.

According to the present invention, a system is described using a control system which can adjust the distance between the absorber plate and the glass cover plate while the collector frame is maintained unamended. Only the metal absorber plate is movable. The absorber can be brought close to the glass cover plate by
- thermal effects (bi-metal for example),
- electric-controlled effects,
- pneumatic effects,
- hydraulic effects,
- chemical/physical effects (PCM).

In one inventive alternative, the mobility of the absorber plate is achieved by a thermal effect. One option is an incorporation of at least one bi-metallic element within the collector. This bi-metallic element is preferably directly in contact with the absorber plate and located between the absorber plate and the collector frame. In this preferred embodiment, the bi-metallic element is capable of being heated by solar radiation either directly or indirectly. Indirect heating may be mediated via the absorber plate.

As a second inventive alternative, the mobility of the absorber plate is achieved by an electrically controlled effect, preferably by the activation of a small electrically connected motor which allows the lifting of the absorber plate.

As a third inventive alternative, the absorber plate preferably is pneumatically and/or hydraulically mobile, preferably by the introduction of compressed air in a confined volume below the absorber which allows the lifting of the absorber plate.

In a further inventive embodiment, the absorber plate comprises or consists preferably of a phase change material (PCM). The expansion of the PCM during the phase change allows thereby the mobility of the absorber plate.

In a further inventive embodiment, the absorber plate comprises or consists preferably of a material or fluid confined in a volume, having a thermal expansion which allows the mobility of the absorber plate.

It is preferred that the absorber plate comprises a metallic sheet under which channels for the transport of the heat exchanging medium are arranged. The absorber plate can be made of plastic or metallic material. As a metallic material, aluminium, copper, iron, steel and mixtures thereof are preferred.

In a further preferred embodiment, the collector further comprises PV cells on the surface of the absorber plate. In this embodiment, the collector is a PVT collector. The PV cells can be deposited, laminated or glued on the surface of the absorber plate.

For this embodiment, the mentioned components of the thermal collector are encapsulated in an electrically insulating polymer. This electrically insulating polymer is preferably selected from the group consisting of ethylene-vinyl acetate, polyvinyl butyrate, thermoplastic vulcanizates, thermoplastic silicone elastomers and its compounds. It is further preferred that the electrically insulating polymer has a thermal expansion coefficient to compensate the difference of the solar cell material and the material selected for the heat exchanger. Preferably, the solar cell material comprises silicon or consists essentially thereof. The material selected for the heat exchanger preferably comprises metal or consists essentially thereof.

The present invention is explained in more detail with respect to the following figures and embodiments.
Figures 1a and 1b show a solar thermal collector and a PVT collector according to the prior art.
Figures 2a, 2b, 3a, 3b, 4a, 4b, 5a, 5b, 6a and 6b show embodiments of the present invention.
Fig. 7 shows schematically different operation modes for the inventive collector.
Figures 8a and 8b show diagrams of simulations of the thermal efficiency curves for a standard thermal collector (Fig. 8a) and a PVT collector in maximum power point mode (Fig. 8b).
Fig. 9 shows in a diagram a calculation of the maximal stagnation temperature as a function of the distance between absorber and glass cover plate for a thermal collector and a PVT collector.

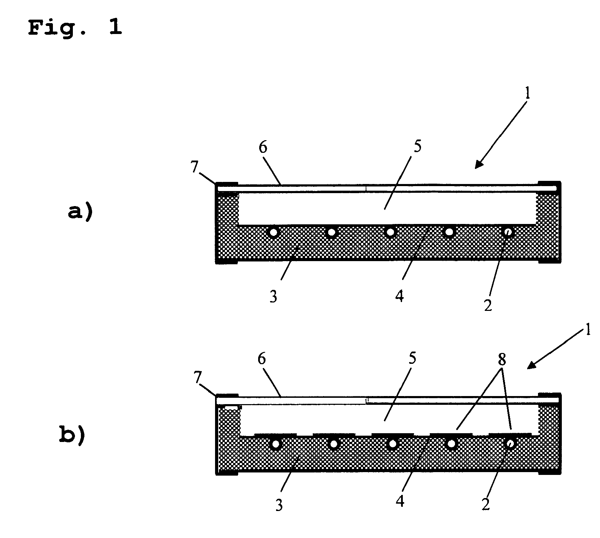

Fig. 1a shows a standard solar collector 1 which is made of a sheet and tube heat exchanger 2 (with or without selective coating) which is embedded in a thermal insulating material 3 and an absorber plate 4 and the absorber plate 4 is separated from the ambient atmosphere by a static air layer 5 and a glass cover 6 on the top side, and by a thermal insulation material and a frame on the back and edge side 7. A PVT collector (Fig. 1b) differs from this standard collector by the fact that PV cells 8 are deposited at the top surface of the sheet and tube heat exchanger 2.

In Figures 1a and 1b, the distance between glass and absorber (called d) is generally set around 2 cm (according to the calculation of Duffie and Beckman, 1980. Duffie, J.A., Beckman, W.A., 1980, Solar Engineering of Thermal Processes, John Wiley & Sons Inc., New York) in order to minimize the thermal losses on the top side of the collector.

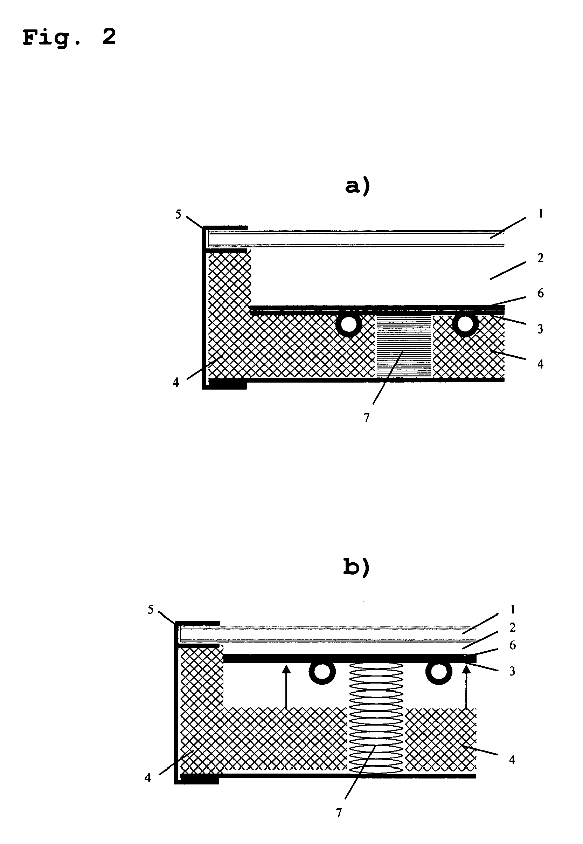

Figures 2a and 2b show PV-thermal collectors according to the present invention in which the distance 2 between glass cover plate 1 and absorber plate 3 is adjusted by a bi-metallic element 7. In Fig. 2a, the distance between the glass cover and the absorber plate is not adjusted (standard condition). In Fig. 2b, the distance between the glass cover and the absorber plate is adjusted by the thermal expansion of the bi-metallic element 7 (stagnation condition).

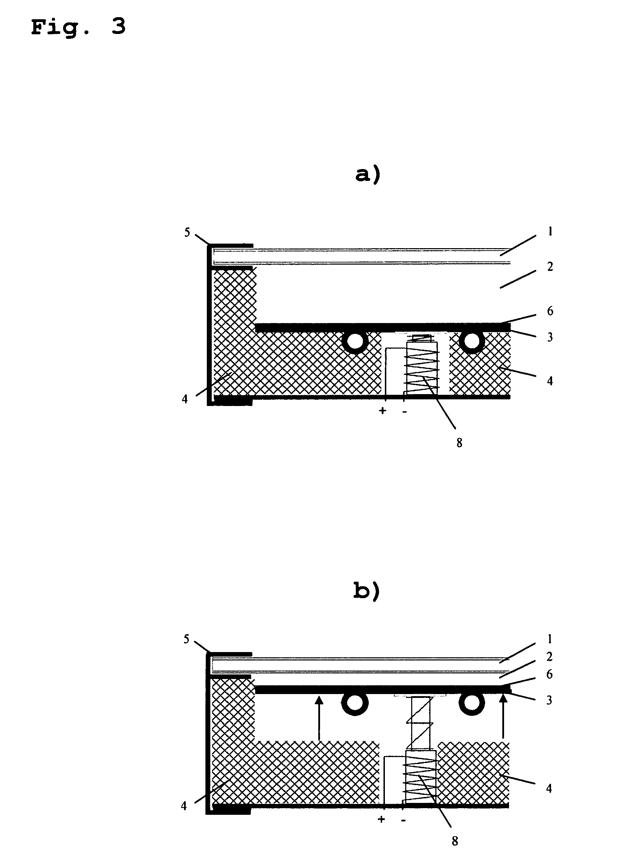

Figures 3a and 3b show PV-thermal collectors according to the present invention in which the distance 2 between glass cover plate 1 and absorber plate 3 is adjusted by a small electrically connected motor 8 (lift magnet motor for example). In Fig. 3a, the distance between the glass cover and the absorber plate is not adjusted (standard condition). In Fig. 3b, the distance between the glass cover and the absorber plate is adjusted by the activation of the small electrically connected motor 8 (stagnation condition).

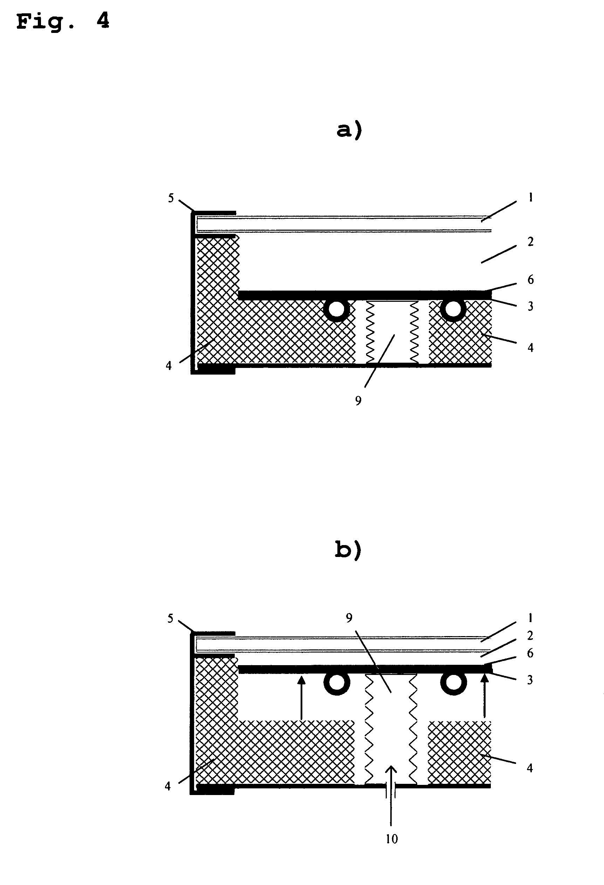

Figures 4a and 4b show PV-thermal collectors according to the present invention in which the distance 2 between glass cover plate 1 and absorber plate 3 is adjusted by a pneumatically effect (e.g. confined air volume 9). In Fig. 4a, the distance between the glass cover and the absorber plate is not adjusted (standard condition). In Fig. 4b, the distance between the glass cover and the absorber plate is adjusted by the introduction of compressed air 10 in the confined volume located below the absorber plate and between the absorber plate and the frame (stagnation condition).

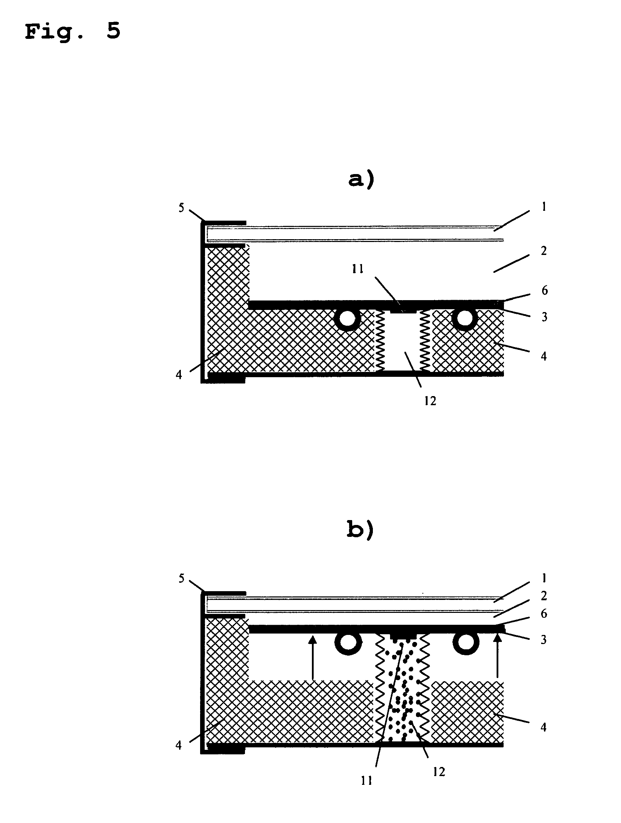

Figures 5a and 5b show PV-thermal collectors according to the present invention in which the distance 2 between glass cover plate 1 and absorber plate 3 is adjusted by the change of phase of a PCM material 11 in a confined volume 12. In Fig. 5a, the distance between the glass cover and the absorber plate is not adjusted (standard condition). In Fig. 5b, the distance between the glass cover and the absorber plate is adjusted by thermally activated change of phase of the PCM material 11 in the confined volume located below the absorber plate and between the absorber plate and the frame (stagnation condition).

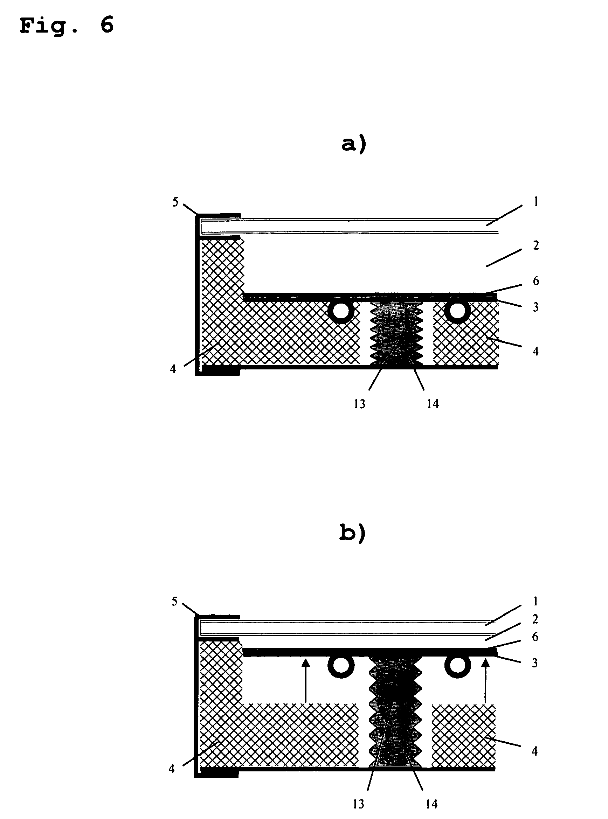

Figures 6a and 6b show PV-thermal collectors according to the present invention in which the distance 2 between glass cover plate 1 and absorber plate 3 is adjusted by the thermal expansion of a fluid or material 13 in a confined volume 14. In Fig. 6a, the distance between the glass cover and the absorber plate is not adjusted (standard condition). In Fig. 6b, the distance between the glass cover and the absorber plate is adjusted by the thermal expansion of the material or fluid 13 in the confined volume 14 located below the absorber plate and between the absorber plate and the frame (stagnation condition).

The system can be thermally activated. As long as the absorber temperature exceeds a set maximum temperature, e.g. 85°C, the system will be activated and the absorber plate approaches the glass cover. In this way, the thermal losses are increased and therefore the temperature will be lowered.

However, the system can be activated according to the absorber temperature (without set temperature). Thus, the distance between absorber and glass cover plate is moving a bit all the time according to its temperature.

The system can be activated according to the incoming solar radiation.

The system can be activated according to the value of flow rate. For example, when the pump is switched off, no water is flowing through the collector, leading to stagnation conditions. In this condition, the system activates and the absorber plate comes closer to the glass cover plate increasing by this way the thermal losses, and therefore reducing the maximal temperature.

Moreover, the system can be activated according to the user's needs. If the user needs hot water, the distance between glass and absorber increases. If the user does not need hot water (holidays for example, or some hours during the day)), the system will be activated and the absorber plate comes closer to the glass cover plate increasing by this way the thermal losses, and therefore reducing the maximal temperature (increase of electrical output in the case of PVT collector).

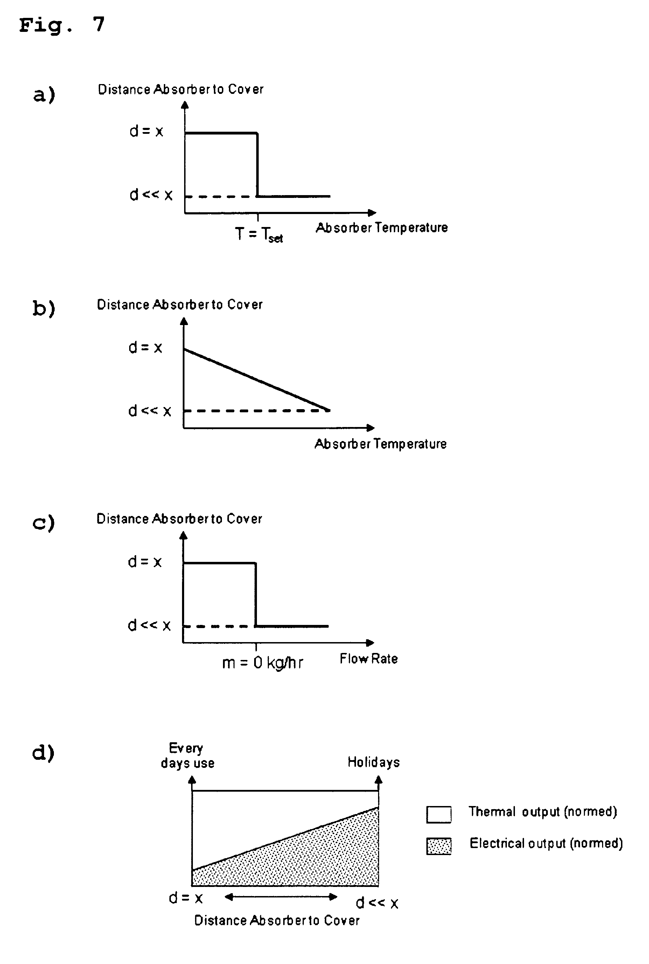

Such regulation options are presented in Fig. 7.

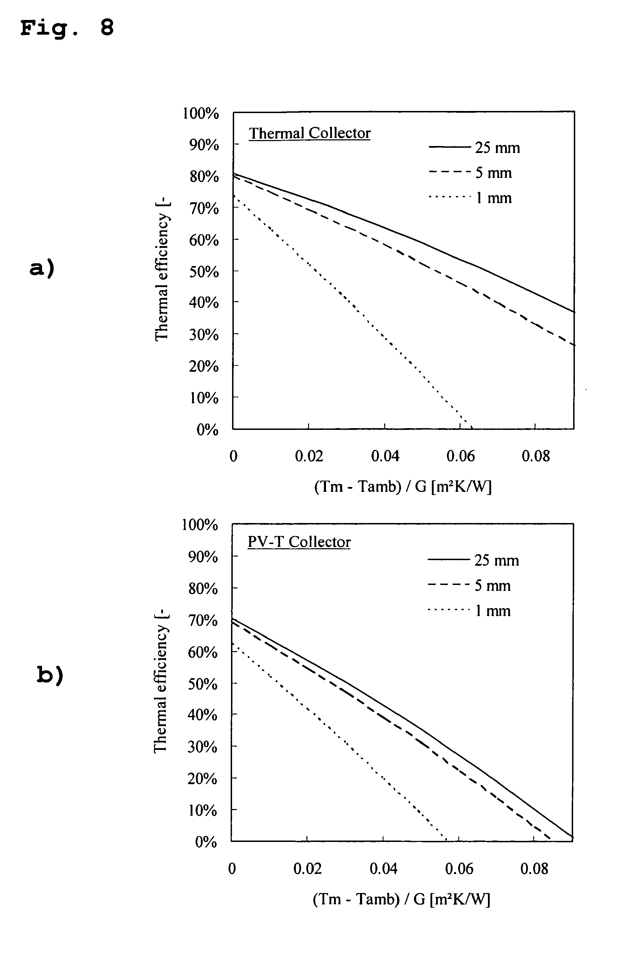

Preliminary calculations have been made in order to evaluate the change in term of thermal losses due to this modification of the distance between absorber plate and glass cover plate. The results of the calculations are presented in the case of a standard collector (Fig. 8a) and in the case of a PVT collector (Fig. 8b).

These results show in both cases that the thermal losses strongly increase when the distance between glass cover and absorber plate falls below 5 mm.

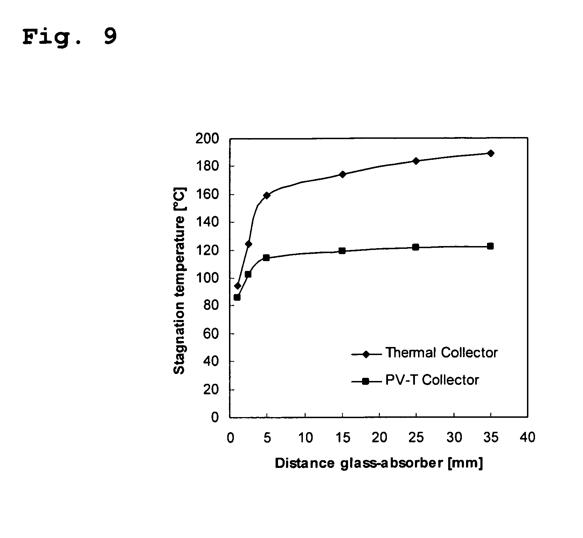

The corresponding maximal stagnation temperatures have been calculated and are presented in Fig. 9. According to the calculations, for standard thermal collectors (selective), the maximal temperature under stagnation is 190 °C without the control system, but only 90 °C if a distance d = 1 mm is obtained using the control system. For PVT collectors, the maximal temperature under stagnation is 120 °C without the control system, but only 85 °C if a distance d = 1 mm is obtained using the control system.

A thermally activated control system can reduce the maximal stagnation temperature of all flat plate covered collectors, reducing the risk of boiling or components degradation.

By PVT collectors, this effect cannot only avoid the boiling and the possible strong degradation of PV components (lack of information for PV module temperature exceeding 85 °C), but also increase the electrical production under stagnation conditions.

## Claims

1. Thermal collector comprising a glass cover (1), an absorber plate (3), a thermally insulating material (4) and a collector frame (5), wherein the glass cover (1) is separated from the absorber plate (3) by an air layer (2), **characterised in that** the absorber plate (3) is mobile to adjust the distance between the glass cover (1) and the absorber plate (3).

2. Thermal collector of claim 1,
**characterised in that** the mobility of the absorber plate (3) is achieved by a thermal effect, preferably by incorporating at least one bi-metallic element (7) directly in contact with the absorber plate (3) and located between the absorber plate and the collector frame (5).

3. Thermal collector of any of the preceding claims,
**characterised in that** the mobility of the absorber plate (3) is achieved by an electrically controlled effect, preferably by the activation of a small electrically connected motor (8) which allows the lifting of the absorber plate (3) .

4. Thermal collector of any of the preceding claims,
**characterised in that** the mobility of the absorber plate (3) is achieved by an pneumatically and/or hydraulically controlled effect, preferably by the introduction of compressed air (10) in a confined volume (9) below the absorber (3) which allows the lifting of the absorber plate (3).

5. Thermal collector of any of the preceding claims,
**characterised in that** the absorber plate (3) comprises or consists of a phase change material (PCM) (11) which during expansion due to a phase change (thermally activated) allows the mobility of the absorber plate (3).

6. Thermal collector of any of the preceding claims,
**characterised in that** the absorber plate (3) comprises or consists of a, preferably liquid or gaseous, material or fluid (13) having a thermal expansion which allows the mobility of the absorber plate (3).

7. Thermal collector of any of the preceding claims,
**characterised in that** the absorber plate (3) comprises a metallic sheet under which channels for the transport of the heat exchange medium are arranged.

8. Thermal collector of any of the preceding claims,
**characterised in that** the absorber plate (3) is a plastic absorber plate, preferably made from polycarbonate, polyphenylene/polystyrene, polyphenylenoxid and mixtures thereof or a metallic absorber plate, preferably made from aluminium, copper, iron, steel and mixtures thereof.

9. Thermal collector of any of the preceding claims,
**characterised in that** the collector further comprises PV cells on the surface of the absorber plate (3).

10. Thermal collector of claim 9,
**characterised in that** the PV cells are deposited, laminated or glued on the surface of the absorber plate (3).

11. Thermal collector of claim 9 or 10,
**characterised in that** the thermal collector is encapsulated in an electrically insulating polymer.

12. Thermal collector of any of claims 9 to 11,
**characterised in that** the electrically insulating polymer is selected from the group consisting of ethylene-vinyl acetate, polyvinyl butyrate, thermoplastic vulcanizates, thermoplastic silicone elastomers and its compounds.

13. Thermal collector of any of claims 9 to 12,
**characterised in that** the electrically insulating polymer has a thermal expansion coefficient to compensate the difference of the thermal expansion coefficients of the solar cell material, preferably silicon, and the material selected for the absorber plate (3), preferably metal.
